# EUROPEAN PATENT SPECIFICATION

(11) **EP 2 343 496 B1**
(45) Date of publication and mention of the grant of the patent: **04.03.2015**
(21) Application number: 10197449.1
(22) Date of filing: 31.12.2010
(51) Int. Cl.: G01B 11/24, B61D 15/12, B61K 9/08

(54) **Train with optical measuring implement**
Zug mit optischer Messvorrichtung
Train avec implémentation de mesure optique

(30) Priority: 31.12.2009 NL 2004043
(43) Date of publication of application: 13.07.2011
(73) Proprietor: VolkerRail Nederland BV, 4131 NJ Vianen (NL)
(72) Inventor: Schoone, Clemens, 4131 NJ, Vianen (NL)
(74) Representative: Assendelft, Jacobus H.W.

(56) References cited:
- EP-A1- 0 007 227
- US-A1- 2003 072 001

## Description

The train with optical measuring implement is designed to measure the track or part of it, e.g. a rail or sleeper, e.g. for wear or deformation. One of the applications of the invention is the implement for monitoring a turnout (also called switch and crossing) of a railway or tramway line for wear and deformation.

A turnout or other part of a railway track is known to undergo wear and deformation with use, which must be corrected from time to time by e.g. grinding or replacement. The correct moment for maintenance is generally determined by periodic measurements of the parameters of one or more components of the turnout, such as rails, by using contact or non-contact or optical sensors, e.g. laser measurement known as triangulation.

With triangulation the component is struck with a laser light beam and a video camera has its optical axis inclined to the direction of the laser beam to read the shape generated by the interference between the laser beam and the component under examination.

The principle of the laser triangulation requires an orthogonal to the object's surface positioned area camera (CCD- or CMOS-matrix) to measure the lateral displacement or the deformation of a laser line projected in a known angle ● (e.g. 60°) onto the object's surface. The elevation profile of interest is calculated from the deviation of the laser line from the zero position. From the deviation of the laser line propagating onto the object's surface, the elevation of the object is determined by the point of incidence.

The measuring implement must be kept clean under all circumstances. Since the measuring implement is typically located at low level, close to the ballast bed of the track, while the train moves at high speeds of 40 km/hour or more, dirt easily concentrates at the optical components, worsening the quality of the measurement.

This invention proposes a device that contains a blower to generate an artificial airflow to keep the optical components clean. The artificial airflow is discharged from one or more nozzles such that around an opening or recess of a housing containing the measuring implement a ring shaped artificial air screen is created and/or said opening or recess is covered by an artificial air blanket, wherein said opening or recess contains or provides the optical window through which an optical component of the measuring implement sends or receives its optical signals.

Presently preferred embodiments are shown in the attached drawing.
Fig. 1 and 2 show a schematic side view;
Fig. 3 shows a photographic side view of part of the train;

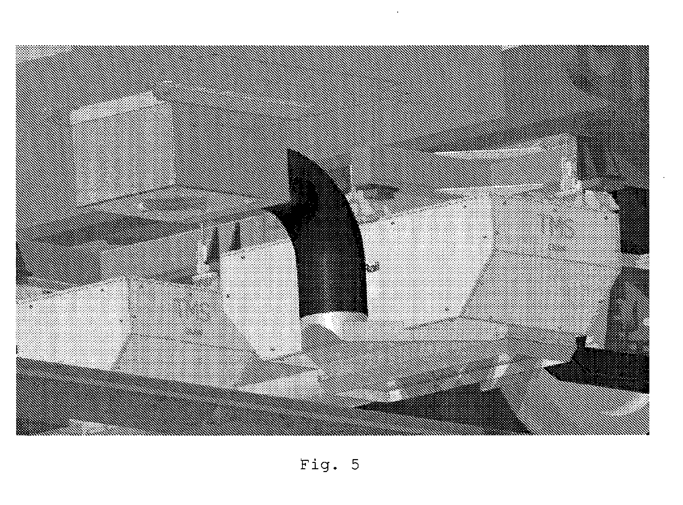

Fig. 4 and 5 show a photographic perspective from above and below of the part shown in fig. 3.

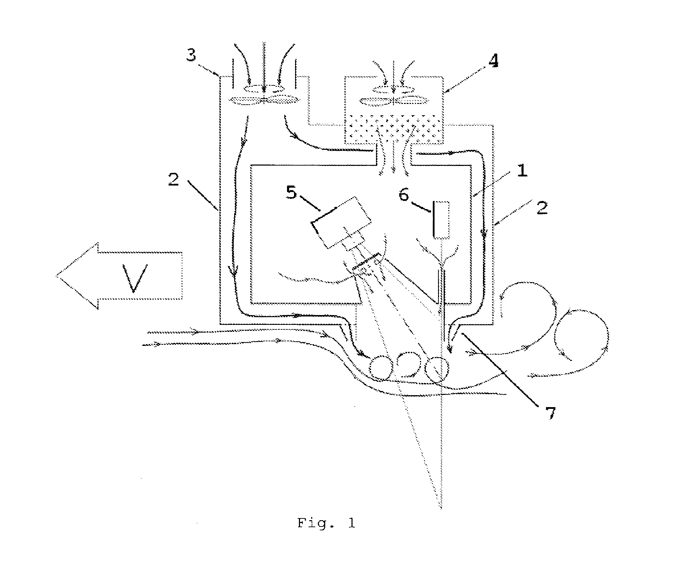

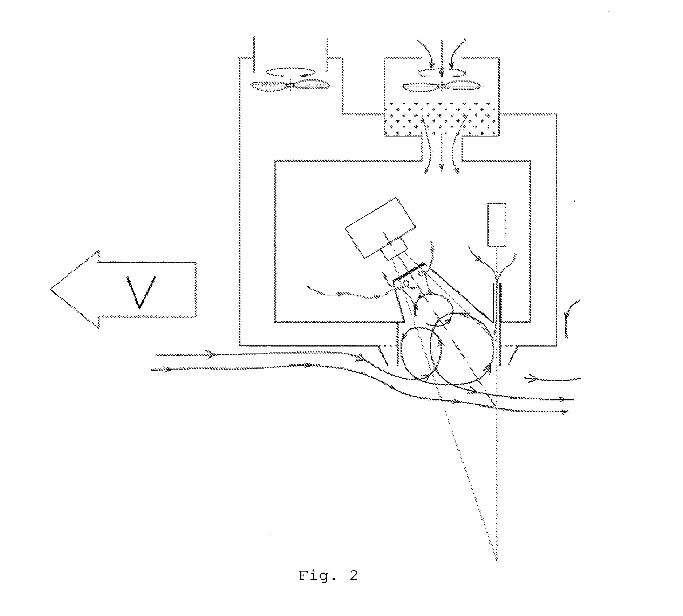

Fig. 1 and 2 show the at the level of the running wheels of the measuring train or at short distance above the rails located recessed housing 1 in sectional side view, with the blower 3 on and off, respectively. This housing contains the optical measuring implement with which the track is measured. The drawing clearly shows the contribution of the by the blower created downward airflow to keep the moving air due to wind and advancement of the train away from the windows through which the downward directed optical rays of the implement pass between the optical components (camera 5 and laser 6) of the implement and the track part (rail) to be measured. The windows are present in the recess of the housing. The optical components are housed in a double walled housing and are supplied by the air conditioner 4 (with blower and air filter) with conditioned air for cooling purposes, which conditioned air is discharged near or through the windows. Through the spacing between the double walls 2 air is supplied by the blower 3 and this cleaning air is discharged in a ring like manner around the recess. The ring shaped nozzle 7 through which the cleaning air is discharged, projects below the housing.

The flows of air from the air conditioner 4, the blower 3 and due to the advancement of the train are indicated by curved arrows in fig. 1 and 2. The direction of advancement of the train is indicated by the straight arrow V in fig. 1 and 2.

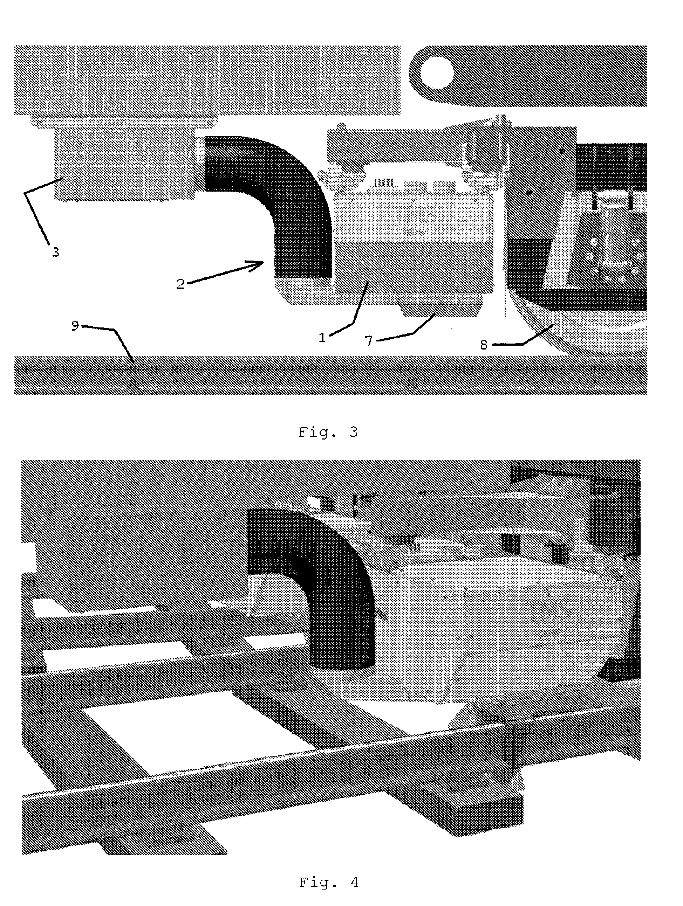

Fig. 3 shows a further embodiment wherein an air duct 2 extends from the blower 3 to the nozzle 7. The running wheel 8 of the train rides on top of the rail 9.

The invention can also be embodied differently. The housing can have a different shape, the windows and components can be located differently. The components can have different optical functions. The artificial air supply from the blower to the discharge nozzle can be through a channel different from the spacing in the double wall. The nozzle 7, or the airflow ejected by the nozzle 7, can be directed differently, e.g. horizontally instead of downward.

## Claims

1. Train with an optical measuring implement contained within a measuring housing at the level of the running wheels, designed to measure the rails of the track, and a device to create an artificial airflow to keep environmental air away from optical windows of said implement, which flow device contains a blower (3) to generate the artificial airflow which is discharged from one or more nozzles (7), wherein a number or all nozzles (7) debouche at a level below the lower side of the measuring housing and thus below the level of said optical windows.

2. Train according to claim 1, wherein an air duct (2) extends from the blower (3) to the nozzle (7).

3. Train according to claim 1 or 2, wherein the airflow is created such that around an optical window of the measuring housing, containing the measuring implement, a ring shaped artificial air screen is created.

4. Train according to any of claims 1-3, wherein the airflow is created such that said optical window is covered by an artificial air blanket, preferably simultaneously with the creation of a ring shaped air screen around the optical window.

5. Train according to any of claims 1-4, wherein an optical window is directed downward. .

6. Train according to any of claims 1-5, wherein an air conditioner (4) is connected to the measuring housing and is designed to inject conditioned air into the preferably sealed inner space of the measuring housing.

7. Train according to any of claims 1-6 which measuring housing is only communicating with the environment through exhaust openings in or around the one or more optical windows, such that air is exhausted from said housing only through or around said exhaust openings.

8. Train according to any of claims 1-7, a single nozzle (7) is present, encircling all optical windows of the housing and directed downward to generate a downward directed air flow preferably creating the downward directed ring shaped artificial air screen.

9. Train according to any of claims 1-8, wherein the optical window contains or provides the means through which an optical component (5, 6) of the measuring implement sends or receives its optical signals to and from, respectively the track.

10. A method for operating a train with an optical measuring implement contained within a measuring housing at the level of the running wheels, designed to measure the rails of the track, and a device to create an artificial airflow, wherein while the train advances, the artificial airflow is created an keeps environmental air away from optical windows of said implement, said artificial airflow being created by a blower (3) of said flow device, supplying an airduct (2) extending from the blower (3) to one or more nozzles (7) from which the by the blower (3) generated artificial airflow is discharged, wherein a number or all nozzles (7) debouche at a level below the lower side of the measuring housing and thus below the level of said optical windows.

## Patentansprüche

1. Zug mit ein optische Messeinrichtung aufgenommen innerhalb ein Messgehäuse auf der Ebene der Laufräder, angepasst, um die Schienen des Gleises zu messen, und eine Vorrichtung, um eine künstliche Luftstrom zu erzeugen um Umgebungsluft von optischen Fenstern der Einrichtung weg zu halten, welche Luftstromvorrichtung ein Gebläse (3) enthalt um der künstliche Luftstrom zu erzeugen, der aus einer oder mehreren Düsen (7) ausgestoßen wird, wobei einige oder alle Düsen (7) ausmunden auf einem Niveau unterhalb der unteren Seite der Messgehäuse und damit innerhalb des Niveaus der optischen Fenstern.

2. Zug nach Anspruch 1, wobei ein Luftkanal (2) sich von dem Gebläse (3) zur Düse (7) erstreckt.

3. Zug nach Anspruch 1 oder 2, wobei die Luftstrom erstellt wird sodass rundum eines optischen Fenster des Messgehäuses, mit der Messvorrichtung, ein ringförmiges künstlichen Luftschirm erstellt ist.

4. Zug nach einem der Ansprüche 1-3, wobei der Luftstrom erstellt ist sodass das optischen Fenster durch eine künstliche Luftdecke bedeckt ist, bevorzugt gleichzeitig mit das erstellen eines ringförmigen Luftschirm rundum des optischen Fensters.

5. Zug nach einem der Ansprüche 1-4, wobei ein optisch Fenster nach unten gerichtet ist.

6. Zug nach einem der Ansprüche 1-5, wobei eine Klimaanlage (4) mit dem Messgehäuse verbunden ist und angepasst ist um klimatisierte Luft in den bevorzugt abgedichteten Innenraum des Messgehäuse zu injizieren.

7. Zug nach einem der Ansprüche 1-6 welches Messgehäuse nur mit den Umwelt Kommuniziert durch Abgasöffnungen im oder um das eine oder mehrere optische Fenster, so dass Luft nur aus dem Gehäuse erschöpft wird durch oder um herum die Abgasöffnungen.

8. Zug nach einem der Ansprüche 1-7, eine einzige Düse (7) ist vorhanden, rundum alle optischen Fensters der Gehäuse und nach unten gerichtet um ein nach unten gerichteten Luftstrom zu erzeugen, bevorzugt die nach unten gerichteten ringförmiges künstlichen Luftschirm erstellt.

9. Zug nach einem der Ansprüche 1-8, wobei der optische Fenster die Mitteln enthalt oder vorseht durch welche ein optische Komponente (5, 6) der Messvorrichtung seinen optischen Signale sendet oder empfangt zu und von der Gleis.

10. Verfahren zum betreiben einer Zug mit eine optische Messeinrichtung enthalten innerhalb ein Messgehäuse auf der Ebene der Laufräder, angepasst, um die Schienen des Gleises zu messen, und eine Vorrichtung, um eine künstliche Luftstrom zu erzeugen, wobei wahrend der Zug fortbewegt, die künstliche Luftstrom erzeugt ist und Umgebungsluft von optischen Fenstern der Einrichtung weg halt, welche künstliche Luftstrom erzeugt wird von einem Gebläse (3) der Luftstromvorrichtung, und versorgt ein Luftkanal (2) welche sich von dem Gebläse (3) zur einer oder mehreren Düsen (7) erstreckt welche die von der Gebläse (3) erzeugten künstliche Luftstrom ausstoßen, wobei einige oder alle Düsen(7) ausmunden auf einem Niveau unterhalb der unteren Seite der Messgehäuse und damit innerhalb des Niveaus der optischen Fenstern.

## Revendications

1. Train avec un élément de mesure optique contenu à l'intérieur une logement de mesure au niveau des roues de roulement, conçu pour mesurer les rails de la voie, et un dispositif pour créer un flux d'air artificielle pour garder l'air de l'environnement loin des fenêtres optique de ledit élément, lequel dispositif de flux contient un ventilateur (3) pour générer le flux d'air artificiel qui est déchargé à partir d'une ou plusieurs buses (7), dans lequel quelques-unes ou toutes les buses (7) débouché à un niveau en dessous du cote inferieur de la logement de mesure et donc en dessous du niveau desdites fenêtres optiques.

2. Train selon la revendication 1, dans lequel un conduit d'air s'étend depuis la ventilateur (3) jusqu'a la buse (7).

3. Train selon la revendication 1 ou 2, dans lequel le flux d'air est créé de telle sorte que autour une fenêtre optique du logement de mesure, contenant ladite élément, un écran d'air artificielle en forme d'anneau est créé.

4. Train selon l'une quelconque des revendications 1-3, dans lequel le flux d'air est créé de telle sorte que la fenêtre optique est couverte par une couche d'air artificielle, de préférence simultanément à la création d'un écran d'air en forme d'anneau autour de la fenêtre optique.

5. Train selon l'une quelconque des revendications 1-4, dans lequel une fenêtre optique est dirigé vers le bas.

6. Train selon l'une quelconque des revendications 1-5, dans lequel un climatiseur (4) est relié au logement de mesure et est conçu pour injecter de l'air conditionné dans l'espace intérieur, de préférence étanche, du logement de mesure.

7. Train selon l'une quelconque des revendications 1-6 le logement de mesure est seulement en communication avec l'environnement par ouvertures d'échappement dans ou autour de la une ou plusieurs fenêtres optique, de telle sorte que l'air est évacué à partir dudit logement seulement à travers ou autour dudit ouvertures d'échappement.

8. Train selon l'une quelconque des revendications 1-7, une buse (7) unique est présent, entourent tous les fenêtres optique du logement et dirigé vers le bas pour créer un flux d' air dirigé vers le bas, de préférence en créant un écran d' air artificielle en forme d'anneau dirigé vers le bas.

9. Train selon l'une quelconque des revendications 1-8, dans lequel la fenêtre optique contenant ou fournit le moyen par lequel un composant optique (5, 6) du dispositif de mesure envoie ou reçoit ses signaux optiques à et de la voie.

10. Procédé pour l'opération d'un train avec un élément de mesure optique contenu a l'intérieur d'une logement de mesure au niveau des roues de roulement, conçu pour mesurer les rails de la voie, et un dispositif pour créer un flux d'air artificielle, dans lequel quant le train avancées, le flux d'air artificielle est créer et garder l'air de l'environnement loin des fenêtres optique de ledit élément, lequel flux d'air artificielle est créer par un ventilateur (3) de lequel dispositif de flux, alimente un conduit d'air (2) s'étend depuis la ventilateur (3) jusqu'a une ou plusieurs des buses (7) à partir lesquelles le flux d'air artificiel qui est créer par le ventilateur (3) est déchargé, dans lequel quelques-unes ou toutes les buses (7) débouché à un niveau en dessous du cote inferieur de la logement de mesure et donc en dessous du niveau desdites fenêtres optiques.
